(19) Europäisches Patentamt
European Patent Office
Office européen des brevets

(11) **EP 2 161 677 A1**

(12) **DEMANDE DE BREVET EUROPEEN**

(43) Date de publication:
**10.03.2010 Bulletin 2010/10**

(51) Int Cl.:
**G06K 9/00** $^{(2006.01)}$     G08G 1/16 $^{(2006.01)}$

(21) Numéro de dépôt: **09166689.1**

(22) Date de dépôt: **29.07.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **29.08.2008 FR 0804778**

(71) Demandeur: **VALEO VISION**
**93012 Bobigny (FR)**

(72) Inventeur: **Charpentier, Adrien**
**70180, STUTTGART (DE)**

(54) **Procédé de détection d'un objet cible pour véhicule automobile**

(57)     L'invention concerne un procédé de détection automatique d'un objet cible se situant sur une route pour véhicule automobile équipé d'un capteur de détection. Elle se caractérise en ce que le procédé comporte les étapes de :
- calculer, au moyen d'informations acquises par une caméra, la pente de la route ;
- détecter un objet cible et sa position au moyen dudit capteur de détection dans une image acquise par la caméra ;
- projeter dans ladite image acquise la position de l'objet cible détecté en tenant compte de la pente calculée ;
- déterminer une région d'intérêt autour de la position de l'objet cible projeté dans ladite image acquise ; et
- valider la détection de l'objet cible dans ladite région d'intérêt.

Fig. 1

**Description**

**Domaine de l'invention**

La présente invention concerne un procédé de détection automatique d'un objet cible se situant sur une route pour véhicule automobile équipé d'un capteur de détection, et un dispositif de détection permettant de mettre en oeuvre ledit procédé.
Elle trouve une application particulière dans le domaine des véhicules automobiles.

**État de la technique**

Dans le domaine des véhicules automobiles, un état de la technique antérieur connu de procédé de détection automatique d'un objet cible se situant sur une route pour véhicule automobile utilise un capteur de détection tel qu'un radar pour détecter la présence d'un objet cible en face d'un véhicule considéré.
Un inconvénient de cet état de la technique antérieur est que de tels capteurs ne permettent pas de déterminer le type d'objet cible.

**Objet de l'invention**

La présente invention a pour but un procédé de détection automatique d'un objet cible se situant sur une route pour véhicule automobile équipé d'un capteur de détection, qui permet de déterminer de façon fiable si l'objet cible est notamment un véhicule suivi.
Selon un premier objet de l'invention, ce but est atteint par un procédé de détection automatique d'un objet cible se situant sur une route pour véhicule automobile équipé d'un capteur de détection, caractérisé en ce qu'il comporte les étapes de :

- calculer, au moyen d'informations acquises par une caméra, la pente de la route ;
- détecter un objet cible et sa position correspondante au moyen dudit capteur de détection ;
- projeter dans ladite image acquise la position de l'objet cible détecté en tenant compte de la pente calculée ;
- déterminer une région d'intérêt autour de la position de l'objet cible projeté dans ladite image acquise ; et
- valider la détection de l'objet cible dans ladite région d'intérêt.

Comme on va le voir en détail par la suite, le fait de combiner la détection effectuée par le capteur avec la projection dans l'image acquise par la caméra, va permettre d'obtenir une détection et une définition du type d'un objet cible fiables.
Selon des modes de réalisation non limitatifs, le procédé présente en outre les caractéristiques suivantes.

- Les informations acquises par la caméra sont une déformation de marquages au sol de la route causée par la pente de la route et le calcul de la pente de la route s'effectue en analysant cette déformation.
- Les informations acquises par la caméra sont la présence d'une paire de sources lumineuses et le calcul de la pente de la route s'effectue en calculant un angle projecteur qui est défini par un angle de site de la paire de sources lumineuses dans un référentiel véhicule situé au niveau des projecteurs du véhicule.
- L'étape de validation d'un objet cible s'effectue par une analyse de traitement d'images de la région d'intérêt. L'analyse de traitement d'images permet de déterminer le type d'objet cible détecté. De plus, le fait que cela soit fait dans la région d'intérêt permet de réduire le coût et le temps de l'analyse de traitement d'images.
- Le procédé comporte une étape supplémentaire de détection de marquages de la route sur laquelle circule le véhicule. Cela permet de détecter si un objet cible tel qu'un véhicule suivi se situe sur la même voie que le véhicule considéré.
- L'étape de validation permet de valider si l'objet cible est un véhicule et/ou de valider si l'objet cible est un obstacle sur la route. Préférentiellement, l'étape de validation permet de valider si l'objet cible est un véhicule suivi et/ou de valider si l'objet cible est un véhicule venant en sens opposé.

Selon un deuxième objet de l'invention, elle concerne un dispositif de détection automatique d'un objet cible se situant sur une route pour véhicule automobile équipé d'un capteur de détection, caractérisé en ce qu'il comporte :

- Un capteur de détection pour détecter un objet cible et sa position correspondante ;
- Une unité de contrôle pour :

- calculer, au moyen d'informations acquises par une caméra, la pente de la route ;
- projeter dans ladite image acquise la position de l'objet cible détecté en tenant compte de la pente calculée ;
- déterminer une région d'intérêt autour de la position de l'objet cible projeté dans ladite image acquise ; et
- valider la détection de l'objet cible dans ladite région d'intérêt.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

## Brève description des figures

D'autres caractéristiques et avantages de la présente invention seront mieux compris à l'aide de la description et des dessins non limitatifs parmi lesquels :

- la Fig. 1 représente un diagramme d'un mode de réalisation non limitatif du procédé de détection selon l'invention ;
- la Fig. 2 représente schématiquement un véhicule sur le point d'aborder une route en montée avec différents paramètres utilisés par le procédé de détection de la Fig. 1 selon un premier mode de réalisation non limitatif d'une première étape de calcul d'une pente de la route ;
- la Fig. 3 est une représentation schématique d'une route en montée avec différentes caractéristiques intervenant dans le procédé de détection de la Fig. 1 et selon la première étape de la Fig. 2 ;
- la Fig. 4 représente schématiquement un véhicule sur le point d'aborder une route en descente avec différents paramètres utilisés par le procédé de détection de la Fig. 1 et selon la première étape de la Fig. 2 ;
- la Fig. 5 est une représentation schématique de deux sources lumineuses dans une image utilisée par le procédé de détection de la Fig. 1 selon un deuxième mode de réalisation non limitatif d'une première étape de calcul d'une pente de la route ;
- la Fig. 6 est un schéma représentant un premier véhicule, un deuxième véhicule sur des plans différents, et un angle projecteur entre le premier et deuxième véhicule, calculé par le procédé de détection de la Fig. 1 selon la première étape de la Fig. 5 ;
- la Fig. 7 est un schéma représentant un premier véhicule, un deuxième véhicule sur des plans différents, et un angle caméra utilisé par le procédé de détection de la Fig. 1 pour le calcul d'un angle projecteur de la Fig. 6 selon une première variante de réalisation ;
- la Fig. 8 est un schéma représentant un premier véhicule, un deuxième véhicule sur des plans différents, et un angle au sol utilisé par le procédé de détection de la Fig. 1 pour le calcul d'un angle projecteur de la Fig. 6 selon une deuxième variante de réalisation ;
- la Fig. 9, 10, 11 et 12 sont des projections d'un point particulier dans une image permettant d'expliquer un calcul d'un angle projecteur effectué par le procédé de la Fig. 1 selon la première étape de la Fig. 5 ;
- la Fig. 13 représente une région d'intérêt définie autour d'un objet cible détecté selon une troisième étape du procédé de détection de la Fig. 1 ; et
- la Fig. 14 illustre un mode de réalisation non limitatif d'un dispositif de mise en oeuvre du procédé de la Fig. 1.

## Description détaillée de modes de réalisation non limitatifs de l'invention

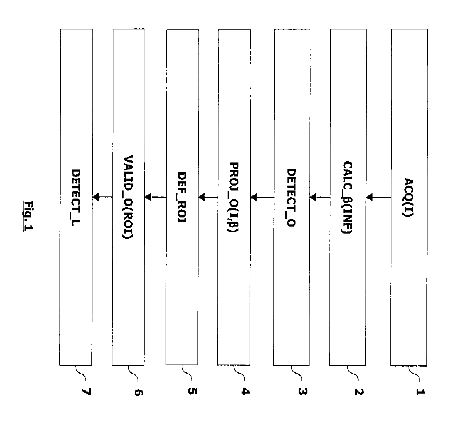

Le procédé de détection automatique d'un objet cible se situant sur une route pour véhicule automobile équipé d'un capteur de détection, selon l'invention, est décrit dans un mode de réalisation non limitatif à la Fig. 1.
Par véhicule automobile, on entend tout véhicule comprenant un moteur.
Le procédé de détection comporte les étapes suivantes telles qu'illustrées à la Fig 1:

- calculer, au moyen d'informations acquises INF par une caméra CAM, la pente $\beta$ de la route R (étape CALC_$\beta$(INF)) ;
- détecter un objet cible O et sa position correspondante au moyen dudit capteur de détection CAPT (étape DETECT_O));
- projeter dans ladite image acquise I la position de l'objet cible O détecté en tenant compte de la pente calculée $\beta$ (étape PROJ_O(I, $\beta$)) ;
- déterminer une région d'intérêt ROI autour de la position de l'objet cible projeté dans ladite image acquise I étape DEF_ROI) ; et
- valider la détection de l'objet cible O dans ladite région d'intérêt ROI (étape VALID_O(ROI)).

Dans un mode de réalisation non limitatif, le procédé de détection comporte en outre une étape supplémentaire de détection de marquages de la route sur laquelle circule le véhicule VH (étape DETECT_L).

On notera enfin que dans un mode de réalisation non limitatif, le procédé comporte en outre une étape supplémentaire :

- d'acquisition d'au moins une image de l'environnement du véhicule VH par au moins une caméra vidéo CAM (étape ACQ(I)).

On notera que ces deux étapes de détection de marquages et d'acquisition d'images peuvent ne pas être comprises dans le procédé décrit, mais peuvent faire partie d'un autre procédé exécuté en amont du procédé décrit.

Pour la suite de la description, dans le mode de réalisation non limitatif décrit, le procédé comprend les étapes supplémentaires d'acquisition d'images I et de détection de marquages de la route sur laquelle circule le véhicule considéré VH.

Les étapes du procédé sont décrites en détail ci-après.

**Dans une première étape 1),** on acquiert au moins une image par la caméra CAM.

L'acquisition d'images I par une caméra CAM sur un véhicule VH, étant connu de l'homme du métier, elle n'est pas décrite ici. On notera que la caméra CAM acquiert des images de l'environnement se trouvant à l'avant du véhicule.

**Dans une deuxième étape 2),** on calcule, au moyen d'informations acquises INF par ladite caméra CAM, la pente β de la route R.

La pente de la route R considérée ici est la pente de la route sur laquelle se trouve un objet cible O ce qui correspond à la pente de la route qui est sur le point d'être abordée par le véhicule VH. En effet, l'objet cible O se trouve en face du véhicule VH. Que l'objet cible O soit sur la même voie de circulation (il roule donc dans la même direction que le véhicule VH), ou qu'il soit sur la voie de circulation opposée (il roule donc en sens inverse du véhicule VH), la pente des deux voies est la même.

On notera que la première et la deuxième étapes peuvent, dans un mode de réalisation non limitatif, être effectuées en parallèle.

Dans un premier mode de réalisation non limitatif, les informations INF acquises par la caméra sont une déformation de marquages au sol de la route R causée par la pente β de la route R et le calcul de la pente β de la route R s'effectue en analysant cette déformation.

Dans un deuxième mode de réalisation, les informations acquises par la caméra sont la présence d'une paire de sources lumineuses S1-S2 et le calcul de la pente β de la route R s'effectue en calculant un angle projecteur β qui est défini par un angle de site de la paire de sources lumineuses S1-S2 dans un référentiel véhicule VH1 situé au niveau des projecteurs P du véhicule.

Ces deux modes de réalisation non limitatifs sont décrits ci-après.

**Premier mode de calcul de la pente de la route.**

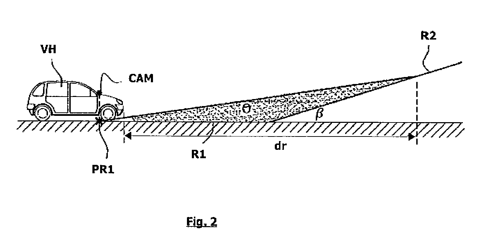

La Fig. 2 montre un véhicule VH embarquant une caméra CAM circulant sur une route R1 et sur le point d'aborder une côte R2.

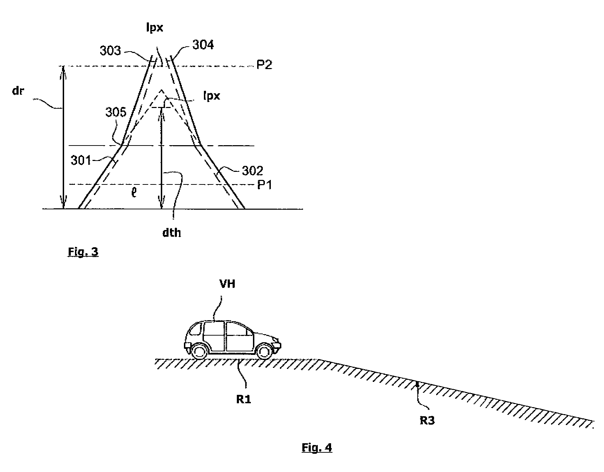

La Fig. 3 montre schématiquement, selon une autre vue, correspondant à la scène de route filmée par la caméra CAM, la route R1, en y faisant apparaître différents paramètres intervenant dans un exemple de mise en oeuvre du calcul de la pente de la route.

Un exemple de calcul de la pente de la route, illustré au moyen des Fig. 2 et 3, est le suivant :

Dans une première étape, des repères présents sur la route R1 sont détectés, sur une image capturée par la caméra CAM, par un algorithme quelconque de reconnaissance de formes par traitement d'images tel que la transformée de Hough.

On repère ainsi, au niveau d'une première position P1, un premier repère, contenant un premier élément 301 et un deuxième élément 302, le premier élément 301 et le deuxième élément 302 étant disposés de part et d'autre de la route R1, et étant de forme allongée selon une direction globalement parallèle au sens de déplacement du véhicule VH.

Dans un mode de réalisation non limitatif, le premier repère est disposé à proximité du véhicule VH, par exemple à une dizaine de mètres.

Avec les mêmes moyens, on repère également, au niveau d'une deuxième position P2 repérée sur la route R1, un deuxième repère, contenant également un premier élément 303 et un deuxième élément 304, du même type que les éléments du premier repère.

Dans un mode de réalisation non limitatif, le deuxième repère est disposé au niveau d'une distance correspondant aux capacités maximales de détection de la caméra CAM, typiquement 50 mètres. La portée de la détection garantit une grande précision dans le calcul de la pente au moins jusqu'à une distance correspondant à cette portée de détection.

Dans un mode de réalisation non limitatif, les éléments qui forment les repères sont du type bande de marquage au sol : leur présence répétée tout au long de la route R1, ainsi que leur forme allongée, vont permettre de détecter la présence d'une pente : en effet, dans un tel cas, l'orientation, sur l'image capturée, des bandes de marquage subit une modification entre les bandes disposées sur la zone plate de la route, et les bandes disposées sur la pente R2.

Dans un mode de réalisation non limitatif, on fait l'hypothèse réaliste que, à courte distance, et donc au niveau de la première position P1, la route est plate.

On peut alors déterminer la distance de ce premier repère à partir de sa position verticale dans l'image et procéder, dans une deuxième étape, au comptage du nombre de pixels présents entre les deux éléments 301 et 302, pour convertir ce nombre de pixels en unité métrique, et déterminer ainsi la largeur I de la route R1.

Dans une étape suivante, on procède à la détermination de la largeur de la route, exprimée en pixels, Ipx, au niveau de la deuxième position P2. En considérant que la largeur de la route R1 est constante entre la première position P1 et la deuxième position P2, on déduit alors, à partir du nombre de pixels comptés au niveau de la deuxième position P2, un éloignement réel dr.

Dans une étape suivante, on détermine, en nombre de pixels, la hauteur dans l'image capturée de la deuxième position P2. On en déduit alors un éloignement théorique dth qui aurait été observé entre le véhicule et la deuxième position P2 si la route était plane entre la première position P1 et la deuxième position P2.

L'existence d'une différence entre les valeurs de l'éloignement théorique et de l'éloignement réel permet de conclure à l'existence d'un changement d'orientation 305 entre l'orientation du premier repère et l'orientation du deuxième repère, et donc à la présence d'une pente.

L'éloignement théorique et l'éloignement réel forment ici les caractéristiques du changement d'orientation entre le premier repère et le deuxième repère qui permettent le calcul du coefficient de la pente R2. La différence entre l'éloignement théorique et l'éloignement réel permet en effet, à partir de formules trigonométriques basiques, de déterminer la pente moyenne $\theta$ entre un point du sol PR1, correspondant à la projection de la position de la caméra CAM sur le sol, et la deuxième position P2. Par extension, on assimile l'angle $\theta$ à un angle $\beta$ correspondant effectivement au coefficient directeur de la pente R2.

Les différentes opérations intervenant dans le calcul de la pente décrit peuvent être réalisées à partir d'une image unique capturée par la caméra, ou sur des images acquises dans le temps, éventuellement successivement.

Comme montré à la Fig. 4, le calcul de la pente peut également être utile dans le cas où la pente détectée est une descente R3 située dans le prolongement d'une route R1.

**Deuxième mode de calcul de la pente de la route.**

Pour ce deuxième mode, on appelle Ch le champ de la caméra CAM, et FX le faisceau lumineux émis par les projecteurs PJ du véhicule VH.

Le calcul de la pente selon ce deuxième mode comporte les étapes suivantes.

**Dans une première étape 1),** on détecte la présence d'une paire de sources lumineuses S1-S2 à partir d'une image I acquise par la caméra CAM.

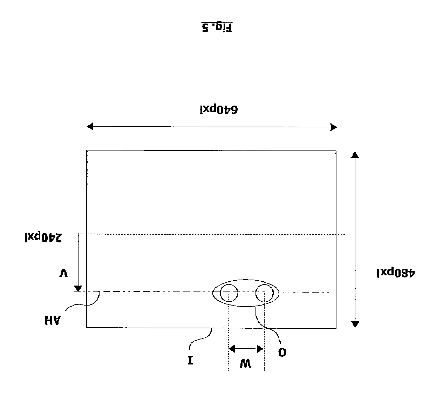

Une paire de sources lumineuses S1-S2, telle qu'illustrée à la Fig. 5, est caractérisée par le fait que les sources lumineuses appartiennent toutes les deux à même véhicule VH2 suivi. Cela peut être soit des projecteurs à l'avant, soit des feux à l'arrière du véhicule VH2 lorsque ce dernier se trouve respectivement sur la même voie que le véhicule VH1, ou sur la voie opposée.

Une telle détection est bien connue de l'homme du métier. Elle peut se baser par exemple sur des critères géométriques pour permettre un appariement entre différentes sources lumineuses. Ainsi, des critères tels que alignement vertical dans l'image I, taille similaire, écartement horizontal par rapport à une taille véhicule standard, similarités d'autres paramètres tels que (feux ou projecteurs)...etc. peuvent être utilisés.

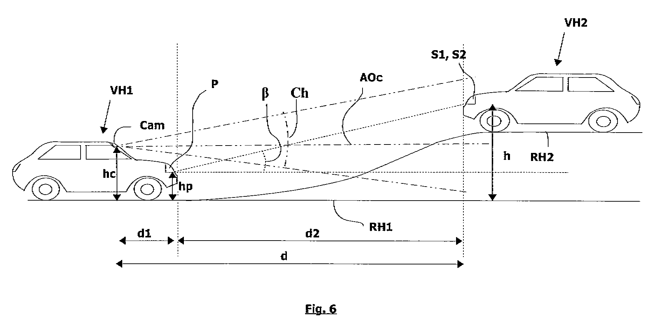

**Dans une deuxième étape 2),** on définit un angle projecteur $\beta$ entre la paire de sources lumineuses S1-S2 et les projecteurs PJ du véhicule VH. Afin de définir cet angle $\beta$, tel qu'illustré à la Fig. 6, les sous-étapes suivantes sont effectuées.

Dans une première sous-étape 2a), on détermine une distance d horizontale entre la caméra CAM du véhicule VH1 et le véhicule suivi VH2 comportant la paire de sources lumineuses S1-S2 déterminée précédemment.

Cette distance d est déterminée au moyen d'un écartement W défini entre les deux sources lumineuses S1 et S2 déterminées ci-dessus, et une courbe de rapport C1.

Ainsi, sur la Fig. 2 est représentée une image I acquise par la caméra CAM et dans laquelle une paire de sources lumineuses S1-S2 a été détectée.

L'écartement W entre les deux sources S1 et S2 peut se lire directement sur l'image en pixels. La courbe de rapport C1 entre cet écart W (axe des abscisses, en pixels) et la distance d (axe des ordonnées, en mm) entre la caméra CAM et la paire de sources lumineuses S1-S2 est une courbe de rapport $1/x$ à un coefficient multiplicatif CO près. Ce coefficient CO est défini de tel manière que la largeur du véhicule suivi VH2 divisé par la distance d entre ce véhicule VH2 et le véhicule VH1 soit égale au nombre de pixels de l'écart W fois la taille d'un pixel.

Dans un exemple non limitatif, on prend comme largeur typique du véhicule suivi VH2 une largeur de 1,6 mètres, et comme taille de pixel 8 microns.

Dans une deuxième sous-étape 2b), on détermine si les deux véhicules VH1 et VH2 sont sur un même plan ou non.

A cet effet, il suffit de regarder sur l'image I acquise par la caméra CAM telle qu'illustrée à la Fig. 5 le décalage V (« offset » en anglais) qui existe entre l'axe horizontal AH passant par la paire de sources lumineuses S1-S2 et le milieu de l'image qui se situe donc à 240 pixels dans l'exemple pris.

On notera que le milieu de l'image I définit dans un mode de réalisation non limitatif l'horizon de la caméra CAM.

Bien entendu, les deux premières sous-étapes 2a) et 2b) peuvent être effectuées en parallèle ou dans l'ordre inverse.

Dans une troisième sous-étape 2c), on calcule l'angle projecteur β à partir de la distance d et du décalage V calculées précédemment et soit d'un angle caméra, soit d'un angle au sol comme décrit en détail ci-après.

Cet angle projecteur β est représenté sur la Fig. 6. Sur cette Fig. 6 sont également représentés :

- le véhicule VH1 comportant la caméra CAM et les projecteurs P.

La caméra CAM est à une hauteur hc du sol d'une première route RH1 sur laquelle se trouve le véhicule VH1, tandis que les projecteurs P se trouvent à une hauteur hp par rapport à ce même sol.

Par ailleurs la caméra CAM est définie par un champ Ch et un axe optique AOc.

- un véhicule suivi VH2 comportant la paire de sources lumineuses S1-S2. La paire S1-S2 est située à une hauteur h par rapport à la première route RH1. Le véhicule suivi VH2 se trouve sur une deuxième route RH2 ayant une pente par rapport à la route RH1 sur laquelle se trouve le véhicule VH1.

L'angle projecteur β est calculé selon deux modes de réalisation non limitatifs par rapport à :

- un angle caméra $\alpha1$ ; ou
- un angle au sol $\alpha2$.

Ces deux modes sont décrits ci-après.

- Premier mode de réalisation : calcul de l'angle projecteur β par rapport à un angle caméra $\alpha1$

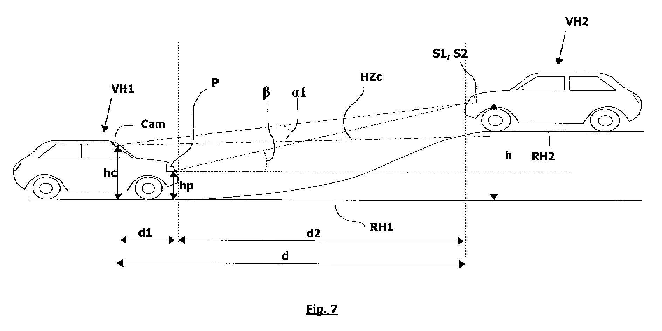

Cet angle caméra $\alpha1$ est illustré sur la Fig. 7. Il est défini par l'angle de site de la paire de sources lumineuses S1-S2 dans un référentiel véhicule VH1 situé au niveau de la caméra CAM.

Comme le montre la Fig. 7, on a :

$$\tan(\alpha 1) = \frac{(h - hc)}{d}$$

et

$$\tan(\beta) = \frac{(h - hp)}{(d - d1)}$$

aux distorsions de l'objectif près, avec :

- β l'angle projecteur défini par une droite reliant la paire de sources lumineuses S1-S2 et les projecteurs P, et par une droite horizontale dans le référentiel de la voiture passant par les projecteurs P du véhicule VH1 ;

- $\alpha1$ l'angle caméra défini de façon pratique par la droite passant par la caméra CAM et la paire de sources lumineuses S1-S2, et l'horizontale, illustrée HZc, par rapport au référentiel véhicule VH1 et donc par rapport à la première route RH1 et reportée au niveau de la caméra CAM ;

- hp, la hauteur des projecteurs P par rapport au sol de la première route RH1 ;

- d, la distance horizontale entre la caméra CAM et la paire de sources lumineuses S1-S2 ; et

- d1, la distance horizontale entre la caméra CAM et les projecteurs P.

On obtient donc :

$$\tan(\beta) = \frac{(hc + d * \tan(\alpha 1) - hp)}{(d - d1)}$$

Soit

[ 1 ] :

$$\beta = \frac{(hc - hp + d * \alpha 1)}{(d - d1)}$$

avec tan ($\alpha$1) approximé à $\alpha$1 car l'angle est petit, au maximum de 10% radian dans un exemple non limitatif.
On peut ainsi facilement passer de l'angle caméra $\alpha$1 à l'angle projecteur $\beta$ avec un calcul simple.
On notera que l'on peut également approximer la distance d-d1 à d pour simplifier.
Il ne reste plus qu'à calculer l'angle caméra $\alpha$1.
A cet effet, on projette un point d'intérêt correspondant à la paire de sources lumineuses S1-S2 dans l'image I.
On a:

$$\tan(\delta + \alpha 1) = \frac{(V * Spxl)}{F}$$

et

$$\tan(\alpha 1) = \frac{(h - hc)}{d}$$

avec :

- $\delta$ l'angle d'inclinaison de la caméra qui est fixe. Dans un exemple non limitatif, cet angle dépend de la longueur du capot véhicule VH1. En effet, il est défini de telle sorte que l'avant du véhicule soit visible dans l'image I. De façon pratique, le capot du véhicule est visible au bas de l'image I.

- V, le décalage mesuré précédemment dans l'image I;

- Spxl, la taille d'un pixel dans l'image; et

- F, la distance focale entre le centre optique AC de la lentille de la caméra CAM et du foyer de l'image I.

On a alors :

$$\frac{(\tan(\delta) + \tan(\alpha 1))}{(1 - \tan(\delta) * \tan(\alpha 1))} = \frac{(\tan(\delta) + (\frac{(h - hc)}{d}))}{(1 - \tan(\delta) * (\frac{(h - hc)}{d}))}$$

Soit :

$$\tan(\delta) + \tan(\alpha 1) = (\frac{(V * Spxl)}{F}) * (1 - \tan(\delta) * \tan(\alpha 1))$$

Ce qui donne :

$$\tan(\alpha 1) * (1 + \tan(\delta) * (\frac{(V * Spxl)}{F})) = \frac{(V * Spxl)}{F} - \tan(\delta)$$

et

$$\tan(\alpha 1) = \frac{(\frac{(V * Spxl)}{F} - \tan(\delta))}{(1 + \tan(\delta) * (\frac{(V * Spxl)}{F}))} = \frac{(V * Spxl - F * \tan(\delta))}{(F + \tan(\delta) * V * Spxl)}$$

Soit:

$$[2] :$$

$$\tan(\alpha 1) = \frac{(V * Spxl - F * (\delta))}{(F + (\delta) * V * Spxl)}$$

On obtient ainsi l'angle caméra $\alpha 1$ par rapport à des valeurs connues ou calculées précédemment et de façon simple.

- Deuxième mode de réalisation : calcul de l'angle projecteur $\beta$ par rapport à un angle au sol $\alpha 2$

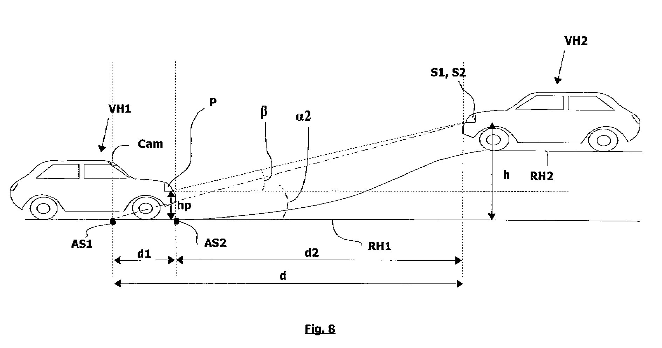

Cet angle au sol $\alpha 2$ est illustré à la Fig. 8. Il est défini par l'angle de site de la paire de sources lumineuses S1-S2 dans un référentiel véhicule VH1 situé à l'aplomb de la caméra CAM.

Comme le montre la Fig. 8, on a :

$$\tan(\alpha 2) = \frac{h}{d}$$

et

$$\tan(\beta) = \frac{(h - hp)}{(d - d1)}$$

avec

- $\alpha 2$ l'angle au sol défini de façon pratique par la droite passant par la caméra CAM et la paire de sources lumineuses S1-S2, et un point AS1 passant par la première route RH1 et situé à l'aplomb de la caméra CAM, et le sol de la première route RH1.

On obtient donc :

$$\tan(\beta) = \frac{(d * \tan(\alpha 2) - hp)}{(d - d1)}$$

Soit:

$$[3]:$$

$$\beta = \frac{(d * \alpha 2 - hp)}{(d - d1)}$$

avec $\tan(\alpha 2)$ approximé à $\alpha 2$ car l'angle est petit, au maximum de 10%radian dans un exemple non limitatif.

On notera que l'on peut également approximer la distance d-d1 à d pour simplifier.

On peut ainsi facilement passer de l'angle au sol $\alpha 2$ à l'angle projecteur $\beta$.

L'intérêt de ce deuxième mode de réalisation est d'obtenir la pente existant entre les deux routes RH1 et RH2, grâce à cet angle au sol $\alpha 2$ soit la différence d'altitude existant entre la première route RH1 sur laquelle se trouve le véhicule VH1 et la deuxième route RH2 sur laquelle se trouve le véhicule suivi VH2.

Il ne reste plus qu'à calculer l'angle au sol $\alpha 2$.

Le calcul de l'angle au sol s'effectue en utilisant l'angle d'inclinaison $\delta$ de la caméra.

Dans une première sous-étape, on détermine l'angle d'inclinaison $\delta$ en fonction notamment de caractéristiques relatives à une projection d'un point d'intérêt dans l'espace sur l'image I.

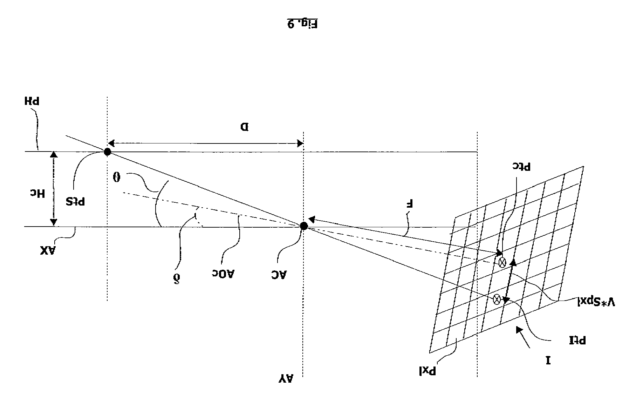

La Fig. 9 représente de manière générale la projection Ptl d'un point d'intérêt PtS sur l'image I. Ce point d'intérêt définit un angle θ entre l'axe vertical AY passant par le centre optique AC de la lentille de la caméra CAM et une droite passant par le point d'intérêt Pts. Dans l'exemple pris, l'angle θ est négatif.

On notera que ce point d'intérêt PtS peut dans des exemples non limitatifs être le point correspondant à la paire de sources lumineuses S1-S2 ou encore un point de marquage au sol sur la route RH2 sur laquelle se trouve le véhicule suivi VH2 (qui permettra de calculer par la suite la pente de cette deuxième route RH2 par rapport à la première route RH1).

On remarquera par ailleurs que l'image I est représentée ici sous forme d'un tableau de pixels (qui est réduit pour plus de commodité).

Comme indiqué sur la Fig. 9, on a :

$$\tan(\theta) = \frac{-Hc}{D}$$

et

$$\tan((\theta) - (\delta)) = \frac{-(V * Spxl)}{F}$$

On obtient donc :

$$\frac{(\tan(\theta) - \tan(\delta))}{(1 + \tan(\delta) * \tan(\theta))} = \frac{-V * Spxl}{F}$$

Soit:

$$[\,4\,]$$

$$\tan(\delta) = \frac{(D * V * Spxl - F * Hc)}{(D * F + Hc * V * Spxl)}$$

avec :

-   D, la distance entre le point de projection PtS et l'axe vertical AY,

-   V, le nombre de pixels Pxl s'étendant entre le point de projection Ptl et un point Ptc correspondant à la projection de l'angle d'inclinaison δ de la caméra sur l'image I.

-   Spxl : la taille d'un pixel Pxl,

-   F, la distance focale,

- Hc la hauteur de la caméra CAM par rapport à un plan horizontal PH (qui peut représenter le sol de la première route RH1) sur lequel se trouve le point d'intérêt PtS.

On obtient ainsi l'angle d'inclinaison δ de la caméra (qui correspond à l'angle entre l'axe optique de la caméra et l'axe horizontal AX) par rapport à des valeurs connues.

Dans une deuxième sous-étape, on calcule l'angle au sol α2 de la même manière que l'on a calculé l'angle d'inclinaison δ calculé ci-dessus.

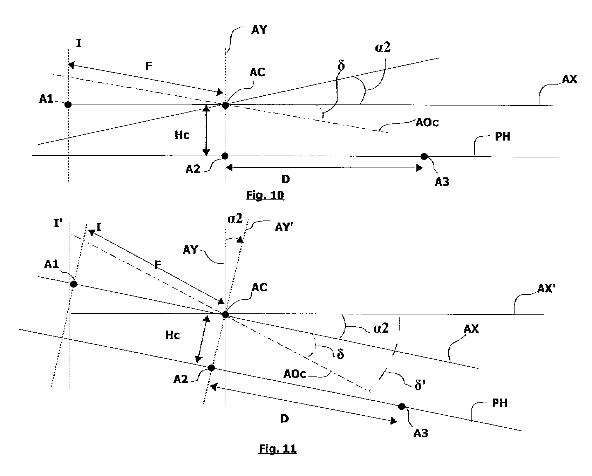

Les Fig. 10, 11 et 12 illustrent ce calcul.

A la Fig. 10 sont représentés l'angle d'inclinaison δ de la caméra tel que vu précédemment ainsi qu'un angle au sol α2 qui est dans cet exemple d'un signe opposé à l'angle d'inclinaison δ, soit ici positif Nous sommes dans l'exemple où un véhicule VH1 est à une altitude plus basse qu'un véhicule suivi VH2 ; dans le cas opposé où c'est le véhicule suivi qui se situe à une altitude plus basse, les signes des angles sont les mêmes

Un premier repère AX-AY considéré est défini par les axes vertical AX et horizontal AY par rapport à un plan PH horizontal. L'axe horizontal AX délimite l'angle d'inclinaison δ et est horizontal par rapport au plan PH.

L'axe vertical AY passe par le centre optique AC de la caméra CAM.

Pour plus de commodités, l'angle au sol α2 a été rapporté au point AC représentant l'axe optique de la caméra.

Sont également représentées sur cette Fig. 10 :

- la hauteur Hc de la caméra par rapport au sol,

- la distance D entre la projection A3 d'un point d'intérêt PtS (non représenté) et le centre optique AC de la caméra, et

- la distance focale F.

La Figure 11 illustre les mêmes données que la Fig. 10 à savoir l'angle d'inclinaison δ de la caméra tel que vu précédemment ainsi qu'un angle au sol α2 mais dans un deuxième repère AX'-AY'.

Ce deuxième repère AX'-AY' considéré est déduit du premier repère AX-AY par une rotation de l'angle au sol α2, ici dans le sens des aiguilles d'une montre.

Pour plus de commodités, l'angle au sol α2 a été rapporté au point AC représentant par l'axe optique de la caméra.

Ce changement de repère va permettre de voir l'angle défini par la somme de l'angle d'inclinaison δ et de l'angle au sol α2 comme un deuxième angle d'inclinaison δ' de la caméra.

Pour calculer cet angle δ' = δ + α2, et donc en déduire l'angle au sol α2, il suffira donc d'utiliser la formule [4] calculée ci-dessus pour l'angle d'inclinaison δ à des coefficients en cosinus près comme expliqué ci-après.

En raison du changement de repère effectué par rotation de l'angle au sol α2, toutes les distances calculées dans le premier repère AX-AY sont projetées dans le deuxième repère AX'-AY', ce qui donne des distances en cosinus de l'angle au sol α2.

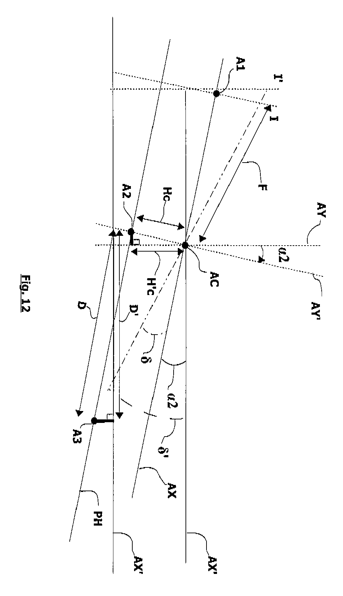

Ainsi, on obtient telles que représentées à la Fig. 12 :

- une hauteur H'c de la caméra qui est la projection de la hauteur Hc (définie dans l'ancien repère AX-AY par le segment AC-A2 sur la Fig.) sur le nouvel axe vertical AY', soit :

$$H'c = Hc * \cos \alpha2$$

- une distance D' qui est la projection de la distance D (défini dans l'ancien repère AX-AY par le segment A2-A3 sur la Fig.) sur le nouvel axe horizontal AX', soit :

$$D' = D/\cos \alpha2,$$

et
- la distance focale F.

Ainsi, dans la formule [4] calculée pour l'angle d'inclinaison δ précédente, on a pour l'angle d'inclinaison δ' :

$$\tan(\delta') = \frac{(D'*V*Spxl - F*Hc')}{(D'*F' + Hc'*V*Spxl)}$$

avec :

- $\delta' = \delta + \alpha2$

- $D' = D/\cos\alpha2$,

- $Hc' = Hc*\cos\alpha2$, et

- F, la distance focale

On obtient :

$$\tan(\delta + \alpha2) = \left(\frac{\left(\frac{D}{(\cos\alpha2)}*(V*Spxl - F*Hc*\cos(\alpha2))\right)}{\left(\frac{(D*F)}{(\cos(\alpha2))} + Hc*\cos(\alpha2)*V*Spxl\right)}\right)$$

Soit

$$\tan(\delta + \alpha2) = \frac{((D*V*Spxl - F*Hc*\cos^2(\alpha2)))}{((D*F) + Hc*\cos^2(\alpha2)*V*Spxl)}$$

et en approximant car l'angle au sol $\alpha2$ étant relativement assez petit (entre -10% radian et +10% radian dans un exemple non limitatif) :

$$[5] : $$

$$\alpha2 = \left(\frac{(D*V*Spxl - F*Hc)}{(D*F + Hc*V*Spxl)}\right) - \delta$$

On obtient ainsi l'angle au sol $\alpha2$ à partir de l'angle d'inclinaison $\delta$ et de valeurs connues ou calculées précédemment pour un point d'intérêt déterminé. Pour le point d'intérêt déterminé correspondant à la paire de sources lumineuses S1-S2, on a D = d, V = v, Hc = hc et PH correspondant à la première route RH1.
En conclusion, grâce au premier mode (calcul à partir de l'angle caméra) ou deuxième mode (calcul à partir de l'angle au sol) de réalisation non limitatifs on obtient ainsi un angle projecteur β en ayant pris comme repère un repère véhicule passant par les projecteurs P du véhicule VH1.

On notera que afin d'obtenir la pente par rapport à la route sur laquelle circule le véhicule considéré, il suffit de prendre hp=0 dans la formule [3] vu précédemment. On a ainsi la pente dans un repère route (comme si les projecteurs se situaient au niveau du sol).

Après le calcul de la pente β de la route selon l'un des deux modes de réalisation ci-dessus, **dans une troisième étape 3),** on détecte un objet cible O et sa position correspondante au moyen dudit capteur de détection CAPT.

Dans des exemples de réalisation non limitatifs, le capteur de détection CAPT est un radar ou un lidar.

De tels capteurs fournissent à l'aide d'un faisceau laser directement une information de position et de vitesse des objets cibles détectés présents dans l'environnement avant du véhicule considéré VH.

L'information de position comporte :

- une distance $d_O$ relative par rapport au véhicule considéré VH qui correspond à une coordonnée en abscisse de l'objet cible O détecté ; et

- un angle appelé azimut $\theta_O$ obtenu par balayage du faisceau laser du capteur, qui est l'angle entre la trajectoire centrée sur le véhicule considéré et la trajectoire passant par l'objet cible détecté. Cet angle correspond à une coordonnée en ordonnée de l'objet cible O détecté.

L'utilisation d'un radar ou d'un lidar étant connue de l'homme du métier, ils ne seront pas décrits plus en détail.

**Dans une quatrième étape 4),** on projette dans ladite image acquise I la position de l'objet cible O détecté en tenant compte de la pente calculée β.

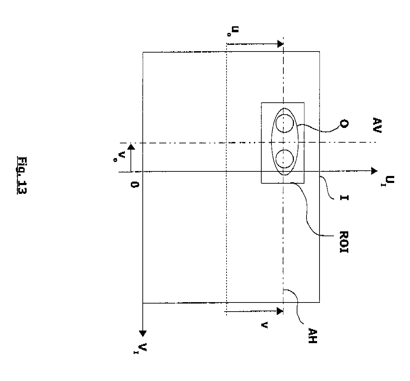

Ainsi, tels qu'illustrés sur la Fig. 13, dans le repère image $U_I$, $V_I$, les coordonnées de l'objet cible détecté O sont :

$$u_0 = \frac{f * \tan(\varphi_0)}{s_{pxl}}$$

(avec $\varphi_O$ l'angle azimut (horizontal) retourné par le capteur).
et avec la formule vue précédemment:

$$\frac{(\tan(\theta) - \tan(\delta))}{(1 + \tan(\delta) * \tan(\theta))} = \frac{-V * Spxl}{F}$$

et la formule

$$\tan(\theta) = \tan(\beta) - \frac{Hc}{d}$$

on calcule $v_O$ en fonction de la pente β de la route qui va être abordée par le véhicule VH, et sur laquelle se situe l'objet cible.

On notera que les coordonnées ci-dessus sont données dans le cas où l'axe de la caméra est confondu avec celui du véhicule.

Bien entendu, si l'axe de la caméra n'est pas confondu avec celui du véhicule, on prendra ce paramètre en considération dans le calcul des coordonnées $u_O$, $v_O$.

Dans un mode de réalisation non limitatif, afin d'affiner encore plus la projection, on peut prendre en compte également l'assiette du véhicule VH dans la projection. En effet, la coordonnée verticale z de l'objet cible, et donc sa position projetée peut dépendre également du tangage du véhicule VH lorsque ce dernier freine ou accélère.

On notera que l'on peut choisir de calculer la position de l'objet cible en fonction de la pente de la route β calculée, tel que vu précédemment, en prenant en compte soit la pente calculée selon un repère véhicule, soit la pente calculée selon un repère route comme vu précédemment.

**Dans une cinquième étape 5),** on détermine une région d'intérêt ROI autour de la position de l'objet cible projeté dans ladite image acquise I.

Dans un exemple de réalisation non limitatif, la région d'intérêt ROI est centrée sur l'objet cible détecté projeté telle qu'illustrée sur la Fig. 13.

Dans des exemples on limitatifs, cette région d'intérêt ROI est de forme carrée ou rectangulaire.

Dans un exemple non limitatif,

- pour la largeur de la région d'intérêt ROI, on fait l'hypothèse d'un véhicule de 2 m de large (1m de chaque côté du point retourné par le capteur CAPT ou le barycentre des points si le capteur CAPT en retourne plusieurs pour une même cible), et on obtient une largeur pour la région d'intérêt en pixels correspondant à ces dimensions véhicule cible, largeur fonction de la distance du véhicule cible également.
- pour la hauteur de la région d'intérêt, on prend juste un ratio de trois quart la largeur.

Bien entendu, dans le cas où le véhicule automobile cible serait un camion, on prend d'autres dimensions adéquates pour la région d'intérêt ROI.

**Dans une sixième étape 6),** on valide la détection de l'objet cible O dans ladite région d'intérêt ROI.

Cette validation s'effectue par traitement d'images. Ainsi, dans des modes de réalisation non limitatifs, le traitement d'images est une analyse de l'objet cible O se trouvant dans la région d'intérêt ROI du point de vue de :

- de la texture de l'objet cible O ;
- des contours de l'objet cible O ;
- de la symétrie de l'objet cible O ;
- de la comparaison de l'objet cible O avec des modèles d'objets déterminés par apprentissage etc.

Ainsi, cette sixième étape permet :

- de déterminer le type d'objet cible O détecté : un véhicule, un arbre, un panneau de signalisation, un piéton etc. ; et

- de limiter l'analyse par traitement d'images à la région d'intérêt déterminée et donc de diminuer le temps d'analyse.

**Dans une septième étape 7),** on détermine le marquage de la route sur lequel se situe le véhicule considéré VH, si cela n'a pas été déjà effectué auparavant.

Cela va permettre par la suite de déterminer si l'objet cible O se situe sur la même voie que le véhicule considéré VH.

Dans des modes de réalisation non limitatifs, la détermination du marquage de la route s'effectue selon la transformée de Hough comme vu selon le premier mode de réalisation de l'étape 1 précédemment. La transformée de Hough étant connue de l'homme du métier, elle n'est pas décrite ici.

Ainsi, en comparant la projection précise de l'objet cible dans l'image I et le marquage de la route sur laquelle circule le véhicule VH, on peut déterminer de façon fiable si un objet cible O se situe sur la même voie que le véhicule considéré VH. Ainsi, cela est notamment intéressant lorsque que l'objet cible est un véhicule suivi.

Ainsi, les étapes 1 à 7 décrites ci-dessus sont exécutées en temps réel à partir d'une image unique capturée par la caméra, ou sur des images acquises dans le temps, éventuellement successivement. La pente β de la route est donc calculée en temps réel.

Ainsi, le procédé décrit permet de détecter de façon fiable un objet cible O et de déterminer s'il s'agit d'un véhicule ou non et de localiser l'objet cible par rapport aux voies de circulation détectées par la caméra.

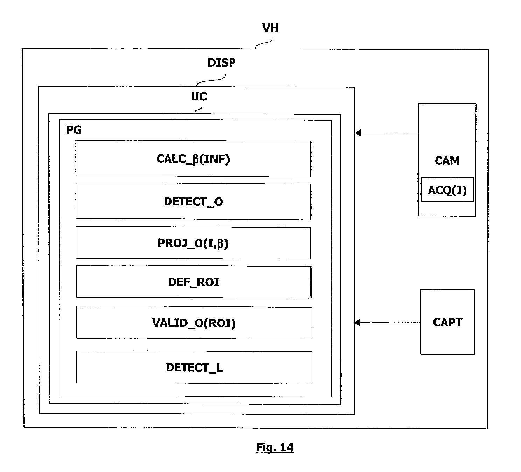

Le procédé de l'invention est mis en oeuvre par un dispositif de détection DISP automatique d'un objet cible se situant sur une route pour véhicule automobile équipé d'un capteur de détection, représenté à la Fig. 14.

Ce dispositif DISP est intégré dans le véhicule VH, et il comporte notamment :

- Un capteur de détection CAPT pour détecter un objet cible O et sa position correspondante ;
- Une unité de contrôle UC pour :

  - calculer, au moyen d'informations acquises INF par une caméra CAM, la pente β de la route R ;
  - projeter dans ladite image acquise I la position de l'objet cible O détecté en tenant compte de la pente calculée β ;
  - déterminer une région d'intérêt ROI autour de la position de l'objet cible projeté dans ladite image acquise I ; et
  - valider la détection de l'objet cible O dans ladite région d'intérêt ROI.

Dans des modes de réalisation non limitatifs, l'unité de contrôle UC permet en outre de définir l'angle projecteur β.

Dans un mode de réalisation non limitatif, le dispositif de détection DISP comporte en outre une unité de traitement d'images TR pour notamment :

- faire une analyse de traitement d'images dans la région d'intérêt ROI lors de l'étape de validation ;
- détecter les lignes blanches, i.e. le marquage de la route.

Dans cette application, la caméra CAM est embarquée sur le véhicule VH. Elle permet notamment d'acquérir au moins une image I de l'environnement se situant à l'avant du véhicule. Elle est par exemple du type VGA de définition 640*480 et acquiert 30 images par seconde. Elle comporte une lentille (non représentée) à cet effet. Elle permet également de détecter une paire de sources lumineuses S1-S2 à partir de l'image I.

Dans un mode de réalisation non limitatif, le dispositif de détection DISP peut en outre comporter la caméra vidéo CAM permettant d'acquérir une image I. On notera que l'unité de traitement d'images TR peut également se trouver dans la caméra CAM ou faire partie de l'unité de contrôle UC également.

On notera que la mise en oeuvre du procédé de détection exposé ci-dessus peut être effectuée au moyen d'un dispositif micro programmé « software », d'une logique câblée et/ou de composants électroniques « hardware ».

Ainsi, le dispositif de détection DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 14, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

Enfin, bien entendu la description peut s'appliquer à des applications différentes de l'application véhicule automobile décrite.

Ainsi, l'invention présente notamment les avantages suivants :

- Elle permet de définir de façon fiable le type d'un objet cible fiable grâce à l'analyse de traitement d'images basée sur la projection précise de l'objet cible dans une image acquise par la caméra ;
- Elle permet d'obtenir de façon précise une projection dans l'image acquise de l'objet cible détecté grâce à l'utilisation de la pente de la route pour déterminer la coordonnée verticale ;
- Elle permet de réduire le coût et le temps d'analyse de traitement d'images grâce à l'analyse de traitement d'image qui n'est effectuée que dans la région d'intérêt définie autour de l'objet cible projeté dans l'image, contrairement à une solution qui porterait sur l'ensemble de l'image ;
- Elle permet de détecter de façon fiable si un objet cible tel qu'un véhicule suivi se situe sur la même voie que le véhicule considéré grâce à la détection par la caméra de la voie de circulation sur laquelle circule le véhicule considéré et à la projection précise de l'objet cible dans l'image acquise ;
- Elle permet d'améliorer la projection d'un objet cible détecté par un capteur tel qu'un radar dans une image, et ce grâce à la pente calculée et ainsi de ne plus faire d'erreur dans la dite projection, contrairement à des solutions qui prendrait :

  - soit comme hypothèse une route plate et n'utilisant donc pas d'information verticale z,
  - soit uniquement l'assiette du véhicule, ces solutions entraînant des risques de fausses ou non détections d'objet cible. On remarquera qu'une solution utilisant uniquement l'assiette du véhicule ne suffit pas dès que la pente de la route varie de quelques degrés seulement surtout lorsqu'une cible objet est loin (environ 30 mètres par exemple) ;

- Elle permet d'améliorer les performances globales d'un dispositif de détection grâce à la combinaison capteur de détection et caméra ;
- Elle permet de ne pas augmenter le coût du capteur de détection en évitant d'utiliser un capteur de détection qui permet de définir la coordonnée verticale z d'un objet cible, ce type de capteur étant cher ; et
- Elle permet d'éviter de chercher un objet cible dans toute une image grâce à la combinaison de la détection par capteur de détection et l'analyse d'image dans une région d'intérêt autour de l'objet cible détecté ;

**Revendications**

1.  Procédé de détection automatique d'un objet cible (O) se situant sur une route (R) pour véhicule automobile (VH) équipé d'un capteur de détection (CAPT), **caractérisé en ce qu'**il comporte les étapes de :

    - calculer, au moyen d'informations acquises (INF) par une caméra (CAM), la pente (β) de la route (R) ;
    - détecter un objet cible (O) et sa position correspondante au moyen dudit capteur de détection (CAPT) ;
    - projeter dans ladite image acquise (I) la position de l'objet cible (O) détecté en tenant compte de la pente calculée (β) ;
    - déterminer une région d'intérêt (ROI) autour de la position de l'objet cible projeté dans ladite image acquise (I) ; et
    - valider la détection de l'objet cible (O) dans ladite région d'intérêt (ROI).

2.  Procédé de détection selon la revendication 1, selon lequel les informations (INF) acquises par la caméra sont une déformation de marquages au sol de la route (R) causée par la pente (β) de la route (R) et le calcul de la pente (β) de la route (R) s'effectue en analysant cette déformation.

3.  Procédé de détection selon la revendication 1, selon lequel les informations (INF) acquises par la caméra sont la présence d'une paire de sources lumineuses (S1-S2) et le calcul de la pente (β) de la route (R) s'effectue en calculant un angle projecteur (β) qui est défini par un angle de site de la paire de sources lumineuses (S1-S2) dans un référentiel véhicule (VH1) situé au niveau des projecteurs (P) du véhicule.

4.  Procédé de détection selon l'une des revendications précédentes, selon lequel l'étape de validation d'un objet cible s'effectue par une analyse de traitement d'images de la région d'intérêt (ROI).

5.  Procédé de détection selon l'une des revendications précédentes, selon lequel il comporte une étape supplémentaire de détection de marquages de la route sur laquelle circule le véhicule (VH).

6.  Procédé de détection selon l'une des revendications précédentes, selon lequel l'étape de validation permet de valider si l'objet cible est un véhicule et/ou de valider si l'objet cible est un obstacle sur la route.

7.  Procédé de détection selon la revendication précédente, selon lequel l'étape de validation permet de valider si l'objet cible est un véhicule suivi et/ou de valider si l'objet cible est un véhicule venant en sens opposé.

8.  Dispositif (DISP) de détection automatique d'un objet cible (O) se situant sur une route (R) pour véhicule automobile (VH) équipé d'un capteur de détection (CAPT), **caractérisé en ce qu'**il comporte :

    - Un capteur de détection (CAPT) pour détecter un objet cible (O) et sa position correspondante ;
    - Une unité de contrôle (UC) pour :

        - calculer, au moyen d'informations acquises (INF) par ladite caméra (CAM), la pente (β) de la route (R) ;
        - projeter dans ladite image acquise (I) la position de l'objet cible (O) détecté en tenant compte de la pente calculée (β) ;
        - déterminer une région d'intérêt (ROI) autour de la position de l'objet cible projeté dans ladite image acquise (I) ; et
        - valider la détection de l'objet cible (O) dans ladite région d'intérêt (ROI).

9.  Produit programme (PG) d'ordinateur comportant une ou plusieurs séquences d'instructions précédentes 1 à 7.

ACQ(I) 1

CALC_β(INF) 2

DETECT_O 3

PROJ_O(I,β) 4

DEF_ROI 5

VALID_O(ROI) 6

DETECT_L 7

Fig. 1

Fig. 2

Fig. 3

Fig. 4

Fig.5

Fig. 6

EP 2 161 677 A1

Fig.7

22

Fig. 8

Fig. 9

Fig. 11

Fig. 10

Fig. 12

Fig. 13

Fig. 14

PG

DETECT_L

VALID_O(ROI)

DEF_ROI

PROJ_O(I,β)

DETECT_O

CALC_β(INF)

UC

DISP

VH

CAPT

CAM

ACQ(I)

**EP 2 161 677 A1**

## RAPPORT PARTIEL
## DE RECHERCHE EUROPEENNE

qui selon la règle 63 de la Convention sur le brevet européen est considéré, aux fins de la procédure ultérieure, comme le rapport de la recherche européenne

Numéro de la demande

EP 09 16 6689

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| T | ALBERTO BROGGI ET AL: "Automatic Vehicle Guidance" 1999, WORLD SCIENTIFIC , XP002531941 * page 91 - page 122 * ----- | 1-9 | INV. G06K9/00 ADD. G08G1/16 |
| T | STILLER C ED - VLACIC LJUBO: "Chapter 5: Towards intelligent automotive vision systems" INTELLIGENT VEHICLE TECHNOLOGIES: THEORY AND APPLICATIONS, BUTTERWORTH-HEINEMANN, OXFORD, 1 janvier 2001 (2001-01-01), pages 113-130, XP008103740 ISBN: 978-0-7506-5093-9 * le document en entier * ----- | 1-9 | |
| T | BERTOZZI M ET AL: "AN EXTENSION TO THE INVERSE PERSPECTIVE MAPPING TO HANDLE NON-FLAT ROADS" PROCEEDINGS OF THE IEEE INTERNATIONAL CONFERENCE ON INTELLIGENTVEHICLE, XX, XX, 28 octobre 1998 (1998-10-28), pages 305-310, XP008052531 * le document en entier * ----- -/-- | 1-9 | DOMAINES TECHNIQUES RECHERCHES (IPC) G06K |

### RECHERCHE INCOMPLETE

La division de la recherche estime que la présente demande de brevet, ou une ou plusieurs revendications, ne sont pas conformes aux dispositions de la CBE au point qu'une recherche significative sur l'état de la technique ne peut être effectuée, ou seulement partiellement, au regard de ces revendications.

Revendications ayant fait l'objet d'une recherche complète:

Revendications ayant fait l'objet d'une recherche incomplète:

Revendications n'ayant pas fait l'objet d'une recherche:

Raison pour la limitation de la recherche:

voir feuille supplémentaire C

| Lieu de la recherche | Date d'achèvement de la recherche | Examinateur |
|---|---|---|
| La Haye | 15 décembre 2009 | Granger, Bruno |

Europäisches
Patentamt

European
Patent Office

Office européen
des brevets

**RAPPORT PARTIEL
DE RECHERCHE EUROPEENNE**

| Catégorie | Citation du document avec indication, en cas de besoin, des parties pertinentes | Revendication concernée |
|---|---|---|
| **DOCUMENTS CONSIDERES COMME PERTINENTS** | | |
| T | L. Vlacic et al: "Intelligent Vehicle Technologies" 2001, SAE International , XP002560169 , page 134 * alinéa [0002] * ----- | 8 |
| T | GONCALO MONTEIRO ET AL: "Wrongway Drivers Detection Based on Optical Flow" IMAGE PROCESSING, 2007. ICIP 2007. IEEE INTERNATIONAL CONFERENCE ON, IEEE, PI, 1 septembre 2007 (2007-09-01), pages V-141, XP031158505 ISBN: 978-1-4244-1436-9 * abrégé * ----- | 9 |
| X,P | EP 2 051 206 A (VALEO VISION [FR]) 22 avril 2009 (2009-04-22) * le document en entier * ----- | 1-9 |
| X,P | EP 1 987 985 A (VALEO VISION [FR]) 5 novembre 2008 (2008-11-05) * le document en entier * ----- | 1-9 |
| X,P | FR 2 916 888 A (VALEO VISION SA [FR]) 5 décembre 2008 (2008-12-05) | 1-9 |
| L | * Ce document est uniquement cité avec la catégorie "L" et non avec les catégories "P" et "X". L'indication des catégories "P" et "X" est causée par un bogue du nouveau logiciel utilisé par l'OEB et ne doit absolument pas être prise en compte.* * le document en entier* ----- | 1-9 |
| L | WO 2007/025621 A (VALEO SCHALTER & SENSOREN GMBH [DE]; REILHAC PATRICE [DE]; CHARPENTIER) 8 mars 2007 (2007-03-08) * le document en entier * ----- | 1-9 |

**CLASSEMENT DE LA DEMANDE (IPC)**

**DOMAINES TECHNIQUES RECHERCHES (IPC)**

EPO FORM 1503 03.82 (P04C11)

Europäisches
Patentamt

European
Patent Office

Office européen
des brevets

**RECHERCHE INCOMPLETE**
**FEUILLE SUPPLEMENTAIRE C**

Revendications susceptibles de faire l'objet de recherches complètes:
8-9

Revendications ayant fait l'objet de recherches incomplètes:
1-7

Raison pour la limitation de la recherche:

La description n'expose pas l'invention de manière suffisamment claire et complète pour qu'un homme du métier puisse l'exécuter, Art 83 EPC.

La demande requiert la projection de la position (obtenue par un capteur de type radar) d'un objet dans une image. Cette projection s'obtient par le calcul des coordonnées u0 et v0, lequel calcul ne fait pas partie des connaissances générales de l'homme du métier.

1 Le calcul de u0 (p. 20, l. 6) requiert le calcul d'un paramètre f qui n'est même pas défini.

2 La formule pour le calcul de v0 n'est même pas donnée. Il est seulement indiqué que ce calcul se fait à partir de la pente  . Cette pente   doit être calculée à partir d'un angle projecteur   (p. 6, l. 12). Comment le premier   doit être déduit du second   n'est également pas donné.

3  Il s'ensuit que la demande ne remplit pas les conditions prescrites dans une telle mesure qu'une recherche significative ne peut être effectuée.

4 Il est remarqué qu'il s'ajoute à ceci que l'objet de la revendication 7 n'est pas exposé bien qu'il ne fasse apparemment pas partie des connaissances de l'homme du métier.

**ANNEXE AU RAPPORT DE RECHERCHE EUROPEENNE
RELATIF A LA DEMANDE DE BREVET EUROPEEN NO.**

EP 09 16 6689

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-12-2009

| Document brevet cité au rapport de recherche | | Date de publication | Membre(s) de la famille de brevet(s) | | Date de publication |
|---|---|---|---|---|---|
| EP 2051206 | A | 22-04-2009 | FR | 2922671 A1 | 24-04-2009 |
| | | | JP | 2009133830 A | 18-06-2009 |
| | | | US | 2009103781 A1 | 23-04-2009 |
| EP 1987985 | A | 05-11-2008 | FR | 2915719 A1 | 07-11-2008 |
| FR 2916888 | A | 05-12-2008 | AUCUN | | |
| WO 2007025621 | A | 08-03-2007 | DE | 102005041241 A1 | 19-04-2007 |

EPO FORM P0460

Pour tout renseignement concernant cette annexe : voir Journal Officiel de l'Office européen des brevets, No.12/82